(19) **Europäisches Patentamt**
**European Patent Office**
**Office européen des brevets**

(11) **EP 1 834 404 B1**

(12) **EUROPÄISCHE PATENTSCHRIFT**

(45) Veröffentlichungstag und Bekanntmachung des Hinweises auf die Patenterteilung:
**29.12.2010 Patentblatt 2010/52**

(21) Anmeldenummer: **05803005.7**

(22) Anmeldetag: **10.11.2005**

(51) Int Cl.:
**H02P 9/42** (2006.01)

(86) Internationale Anmeldenummer:
**PCT/EP2005/055882**

(87) Internationale Veröffentlichungsnummer:
**WO 2006/072498 (13.07.2006 Gazette 2006/28)**

(54) **STROMAGGREGAT UND VERFAHREN ZUR ERZEUGUNG VON STROM EINER VORBESTIMMTEN NETZFREQUENZ**

GENERATING UNIT AND METHOD FOR PRODUCING A CURRENT WITH A PRE-DETERMINED NETWORK FREQUENCY

GROUPE ELECTROGENE ET PROCEDE DE PRODUCTION DE COURANT A UNE FREQUENCE RESEAU DEFINIE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **07.01.2005 EP 05000257**

(43) Veröffentlichungstag der Anmeldung:
**19.09.2007 Patentblatt 2007/38**

(73) Patentinhaber: **SIEMENS AKTIENGESELLSCHAFT 80333 München (DE)**

(72) Erfinder:
• **DE LAZZER, Armin**
**45479 Mülheim (DE)**
• **NÖVER, Peter**
**41179 Mönchengladbach (DE)**
• **LEHMANN, Christoph**
**47506 Neukirchen-Vluyn (DE)**

(56) Entgegenhaltungen:
**WO-A-2004/030199**

**Beschreibung**

Die Erfindung betrifft ein Stromaggregat aufweisend einen Antrieb, einen Generator mit einem Stator und einem Rotor, und einen Frequenzumformer sowie ein Verfahren zur Erzeugung von Strom einer vorgegebenen Netzfrequenz. Ein solches Stromaggregat ist in der WO 2004030199 offenbart.

Übliche Stromaggregate nutzen einen Generator in Form einer Synchronmaschine. Dabei wird die elektrische Leistung vom feststehenden Generatorteil (Stator) bereitgestellt. Der den Generator antreibende Wellenstrang ist dabei identisch mit dem Wellenstrang des Antriebs, der beispielsweise in Form einer Turbine gebildet ist. Der Wellenstrang ist im Generator Teil eines Rotors mit einer Rotorwicklung, die ein sich gleichmäßig mit dem Rotor und damit ein sich mit der Drehzahl des Antriebs drehendes magnetisches Erregerfeld generiert. Damit wird im Generator eine Drehfelddurchflutung erzeugt, die gegenüber dem rotierenden Rotor stationär ist, d. h., die Drehfelddurchflutung rotiert mit gleicher Drehzahl wie der Antrieb und der Rotor. Dadurch, dass der oben genannte Wellenstrang (des Antriebs und des Rotors) zum Beispiel bei einer zweipoligen Synchronmaschine mit der Netzfrequenz, oder bei höherpoligen Synchronmaschinen mit einem Bruchteil der Netzfrequenz, rotiert, kommt die Drehfelddurchflutung mit der Drehfeldfrequenz in Höhe der Netzfrequenz zustande. Das heißt, im Stator wird Wechselstrom der Netzfrequenz induziert. Durch diese Vorgehensweise ist allerdings die Drehzahl des Wellenstrangs fest an die Netzfrequenz gekoppelt. Dies schränkt die Flexibilität bei der Gestaltung der das Drehmoment erzeugenden Komponente - also des Antriebs, z. B. in Form einer Gas-, Dampf-, Wasserturbine oder eines Kolbenmotors oder anderer Antriebsaggregate - signifikant ein.

Zur Vermeidung dieses Nachteils konnten bisher bei kleinen Generatorleistungen Getriebe zwischen den Antrieb und den Generator geschaltet werden. Andere Lösungen sehen vor, die gesamte ausgehende Leistung des Generators durch eine elektronische Umrichtung mittels eines Netzfrequenzumformers an die Netzfrequenz anzupassen. Beide Ansätze eignen sich jedoch nicht für hohe Ausgangsleistungen. Getriebelösungen sind etwa bis 80 MW Leistung denkbar. Eine Umrichtung einer Gesamtgeneratorleistung wurde je nach Drehzahl etwa bis 25 MW realisiert.

Eine weitere Möglichkeit besteht darin, einen als Synchronmaschine arbeitenden Generator auf eine Ausgangsfrequenz auszulegen, die von der gewünschten Netzfrequenz abweicht. Um die Ausgangsfrequenz auf die Netzfrequenz zu bringen, wird direkt am Generator ein Elektromotor betrieben, der mit Netzfrequenz oder einem Bruchteil derselben rotiert und vom Generator im Synchronbetrieb angetrieben wird. Der Motor liefert seinerseits Netzfrequenz. Diese Vorgehensweise ist jedoch kapitalintensiv und verlustbehaftet, so dass nur unzureichende Wirkungsgrade erreicht werden können.

Zusammenfassend muss also bei hohen Generatorleistungen der Antrieb notwendigerweise mit Netzfrequenz oder einem Bruchteil derselben rotieren, was eine unerwünschte Zwangsbedingung bei der Stromerzeugung durch ein Stromaggregat darstellt.

Wünschenswert wäre es, eine Entkopplung von Antrieb und Generator selbst bei beliebig vorgegebener Netzfrequenz zu erreichen.

An dieser Stelle setzt die Erfindung an, deren Aufgabe es ist, eine Vorrichtung und ein Verfahren anzugeben, mit dem Strom bei einer vorgegebenen Netzfrequenz erzeugt werden kann, bei dem der Antrieb und der Generator hinsichtlich einer Frequenzauslegung entkoppelt sind.

Betreffend das Verfahren nach Anspruch 15 wird die Aufgabe durch ein Verfahren der eingangs genannten Art gelöst, bei dem in einem Generator, aufweisend einen Rotor und einen Stator,

- eine Rotorwicklung mit einer variablen Drehfrequenz (n) rotiert wird;
- Messwerte des Generators aufgenommen werden, der Generator simuliert wird, und ein Steuersignal ausgegeben wird; und
- aufgrund des Steuersignals eine elektrische Beaufschlagung der Rotorwicklung derart bewirkt wird, dass bei variabler Drehfrequenz des Rotors eine Drehfelddurchflutung des Generators mit zum Rotor variabler Rotordrehfeldfrequenz von der Rotorwicklung gemäß der Formel $n = \dfrac{f_1 - f_2}{p}$ erzeugt wird, dass sich eine vorbestimmte Statordrehfeldfrequenz einstellt wobei n die Drehfrequenz des Rotors ist, $f_1$ die Statordrehfeldfrequenz ist, d. h. die den Stator durchsetzende Frequenz der Drehfelddurchflutung, $f_2$ die Rotordrehfeldfrequenz ist, d. h. die sich relativ zur Rotordrehzahl ergebende Frequenz der durch die Rotorwicklung erzeugten Drehfelddurchflutung, p die Anzahl der Polpaare des Generators ist.

Mit anderen Worten: Die variable Drehfrequenz des Rotors wird durch eine Regelung ausgeglichen, welche die Rotorwicklung derart beaufschlagt, dass eine Drehfelddurchflutung des Generators durch eine zum Rotor variable Rotordrehfeldfrequenz zu einer vorbestimmten Statordrehfeldfrequenz führt.

Betreffend die Vorrichtung nach Anspruch 1 wird die Aufgabe durch die Erfindung mit einem Stromaggregat der eingangs genannten Art gelöst, das aufweist:

- einen Antrieb,
- einen Generator mit einem Stator und einem Rotor, und
- einen Frequenzumformer,

wobei erfindungsgemäß:

- der Antrieb zur Rotation des Rotors mit variabler Drehfrequenz ausgelegt ist;
- der Rotor eine Rotorwicklung aufweist, die zur Erzeugung einer Drehfelddurchflutung des Generators mit zum Rotor variabler Rotordrehfeldfrequenz ausgelegt ist;
- der Frequenzumformer mit der Rotorwicklung elektrisch verbunden ist;
- eine Regelung vorgesehen ist, aufweisend eine Aufnahme für Messwerte vom Generator, eine Recheneinheit für eine Generatorsimulation und eine Ausgabe für ein Steuersignal an den Frequenzumformer; wobei
- aufgrund des Steuersignals eine elektrische Beaufschlagung der Rotorwicklung durch den Frequenzumformer gemäß der Formel $\quad n = \dfrac{f_1 - f_2}{p}$ bewirkbar ist, dass bei variabler Drehfrequenz des Rotors und variabler Rotordrehfeldfrequenz eine vorbestimmte Statordrehfeldfrequenz vorliegt wobei n die Drehfrequenz des Rotors ist, $f_1$ die Statordrehfeldfrequenz ist, d. h. die den Stator durchsetzende Frequenz der Drehfelddurchflutung, $f_2$ die Rotordrehfeldfrequenz ist, d. h. die sich relativ zur Rotordrehzahl ergebende Frequenz der durch die Rotorwicklung erzeugten Drehfelddurchflutung, p die Anzahl der Polpaare des Generators ist.

Die Erfindung geht dabei von der Überlegung aus, dass durch die Verwendung eines Erregerkonzeptes, bei dem kein gegenüber dem Rotor feststehendes, sondern ein gegenüber dem Rotor umlaufendes Erregerfeld in Form einer Drehfelddurchflutung erzeugt wird, sich insbesondere eine vorgegebene Netzfrequenz im Stator des Generators durch eine Statordrehfeldfrequenz erzeugen lässt, die vorgegeben wird. Dies kann mit anderen Worten dadurch geschehen, dass die Differenz aus einer Rotationsgeschwindigkeit (Drehfrequenz) der die Erregerwicklung (Rotorwicklung) tragenden Welle (Rotor) und der Umlaufgeschwindigkeit (Rotordrehfeldfrequenz) des Erregerfeldes (Drehfelddurchflutung) relativ zum Rotor bzw. zur Welle des Antriebs angepasst wird. Die Frequenz, mit der der Generator seine Leistung abgibt wird dabei durch eine geeignete elektronische Regelung der Erregung von der Drehfrequenz des die Leistung einbringenden Antriebs entkoppelt.

Die Erfindung geht dabei von der Erkenntnis aus, dass ein dafür vorzusehender Generator als Teil des Stromaggregats bezüglich seines grundsätzlichen Aufbaus eine Mischung aus Synchronmaschine und Asynchronmaschine darstellt. Im Betriebsfall wird der Generator weitgehend synchron betrieben. Eine analog zu einer Asynchronmaschine im Prinzip mögliche Betriebsweise, wie sie beispielsweise bei Motoren bekannt ist, wäre nachteilig. In dem Fall würde nämlich der Generator in Form einer Asynchronmaschine mit Kurzschlussläufer (Käfig) vorzusehen sein, bei dem der Frequenzumformer (Umrichter) die komplette, vom Stator des Generators abgehende Leistung umzurichten hätte. Dazu wäre ein Frequenzumformer in seiner Dimensionierung nachteiligerweise überdimensioniert auszulegen. Demgegenüber sieht das erfindungsgemäße Konzept vor, dass der Frequenzumformer mit der Rotorwicklung elektrisch verbunden ist, so dass zur elektrischen Beaufschlagung der Rotorwicklung zur Erzeugung der Drehfelddurchflutung mit der variablen Rotordrehfeldfrequenz lediglich die Rotorleistung umzurichten ist. Die Statorleistung kann wie bei einer üblichen Synchronmaschine mit der vorbestimmten Statordrehfeldfrequenz als Netzfrequenz direkt dem Netz zugänglich gemacht werden.

Das vorgeschlagene Konzept eignet sich insbesondere für einen Einsatz im Kraftwerksbereich aber auch in Bereichen, wo das vorgeschlagene Stromaggregat als Lastspitzenaggregat oder als mobile Energieerzeugungseinheit eingesetzt wird. Gerade im letzteren Fall ist nämlich das durch das erfindungsgemäße Konzept bewirkte deutlich bessere dynamische Verhalten des Antriebs und des Generators von Vorteil, wobei dennoch eine vorgegebene Statordrehfeldfrequenz für einen Netzbetrieb bereitgestellt werden kann, der nicht notwendigerweise die Stabilitätsanforderungen von Großstromnetzen erfüllen muss. Ein weiterer Vorteil des vorliegenden Konzepts besteht darin, dass das vorgeschlagene Stromaggregat eine besonders breitbandige Erzeugung von Rotorspannungen einerseits und Statorspannungen andererseits ermöglicht. So kann das Stromaggregat vorteilhaft dazu verwendet werden, bei moderaten Rotorspannungen im Subkilovoltbereich besonders hohe Statorspannungen im Bereich von 10 kV oder mehr, beispielsweise bei einer Leistungsabgabe im Kilowatt- bis 100-Kilowattbereich, vorzunehmen. In jedem Fall wäre der Frequenzumformer (Umrichter) besonders kompakt und kostengünstig auslegbar, da er ausschließlich die Rotorleistung umrichten muss. Das heißt gegenüber einer Ausführung des Standes der Technik, bei der üblicherweise die gesamte ausgehende Generatorleistung umgerichtet wird, besteht der Vorteil, dass die elektrotechnischen Steuerkomponenten eine geringere Leistung umsetzen müssen. Ganz generell ist die Drehzahl der die Leistung generierenden Welle, d. h. die Drehzahl des Antriebs, unabhängig von der Netzfrequenz wählbar und dennoch ist eine beliebige konstante oder auch variable Statordrehfeldfrequenz erzielbar. Dies erlaubt wirkungsgradgünstigere und kompaktere Ausführungen der Antriebskomponenten. So können beispielsweise bei einem übersynchronen Betrieb des Generators Getriebeantriebsdrehzahlen von mehr als 3.000 U/min bzw. 3.600 U/min realisiert werden - das entspricht synchronen Drehzahlen zweipoliger Drehfeldmaschinen bei 50 Hz bzw. 60 Hz Netzfrequenz. Bei einem vierpoligen Generator sind die oben genannten Umdrehungszahlen halb so groß, bei einem sechspoligen Generator sind die oben genannten Umdrehungszahlen zu dritteln.

Im Unterschied zu einer reinen Synchronmaschine lässt sich bei dem hier vorgestellten erfindungsgemäßen Konzept einer einstellbaren Synchronmaschine die Drehfelddurchflutung also hinsichtlich ihrer für den Stator wirksamen Drehfeldfrequenz unmittelbar beeinflussen. Daraus resultiert bei entsprechender Regelung nicht nur ein erheblich besseres dynamisches Verhalten, sondern erlaubt auch den Bau eines Aggregats für unterschiedliche bzw. variable oder im Rahmen von Netzschwankungen ggf. stark transiente Netzfrequenzen. Das Stromaggregat gemäß dem erfindungsgemäßen Konzept wird also vor allem durch eine elektrotechnische Regelung der Umlaufgeschwindigkeit der Drehfelddurchflutung an die Netzfrequenz angepasst. Die Regelung kann dabei auf eine Vorgabe einer Statordrehfeldfrequenz ausgelegt sein, wobei die Statordrehfeldfrequenz in der Regel einer Netzfrequenz entspricht. Eine Netzfrequenz kann dabei insbesondere eine Standardfrequenz von 50 Hz oder 60 Hz sein. Im Prinzip kann auch jede andere oder eine beliebig variierende Netzfrequenz in Form der Statordrehfeldfrequenz erzielt werden.

Vorteilhafte Weiterbildungen der Erfindung sind den Unteransprüchen zu entnehmen und geben im Einzelnen vorteilhafte Möglichkeiten an, das erfindungsgemäße Konzept hinsichtlich seiner wesentlichen Vorteile und weiterer vorteilhafter Ausbildungen zu realisieren.

Besonders bevorzugt ist die Regelung wenigstens mit einer Regelverbindung zum Generator und einer Regelverbindung zum Frequenzumformer verbunden, die zur Übermittlung der Messwerte vom Generator zur Regelung bzw. zur Übermittlung eines Steuersignals, insbesondere eines Stromsteuersignals, von der Regelung zum Frequenzumformer ausgelegt ist. Dies hat den Hintergrund, dass im Rahmen des allgemeinen Konzepts eine Anpassung der Frequenz der Drehfelddurchflutung zur Erreichung einer vorbestimmten Statordrehfeldfrequenz vor allem durch eine Anpassung der Rotordrehfeldfrequenz erreicht werden soll.

Insbesondere ist die Regelung dazu in Form einer "feldorientierten" Regelung ausgelegt. "Feldorientiert" heißt in diesem Zusammenhang, dass insbesondere die relevanten Magnetflüsse innerhalb des Generators durch ein entsprechendes Differentialgleichungssystem simuliert werden. Die Messwertaufnahme betrifft insbesondere Messwerte wie Ströme und Spannungen des Stators. Dabei kann nun die Messwertaufnahme grundsätzlich auf den Stator beschränkt sein. Ein Rotor könnte dabei simuliert werden. Vorzugsweise können jedoch auch Messwerte wie Ströme und Spannungen des Rotors sowie eine Drehzahl bzw. Beschleunigung des Rotors aufgenommen werden. Gegebenenfalls können also zusätzlich oder alternativ neben Statormesswerten auch Rotormesswerte herangezogen werden, um eine Simulation zu unterstützen oder zu vereinfachen. Der Prozessor der Regelung ist für eine Maschinensimulation ausgelegt, um ein entsprechendes Steuersignal anzugeben, das eine elektrische Beaufschlagung der Rotorwicklung derart angibt, dass die damit erzeugte Drehfelddurchflutung zu einer vorbestimmten Statordrehfeldfrequenz führt.

Zur Anbindung an ein Netzwerk ist insbesondere der Generator elektrisch mit einem Netzanschluss verbunden. Zur Stromversorgung des Frequenzumformers ist insbesondere der Frequenzumformer ggf. über einen Transformator mit dem Netzanschluss verbunden. Der Transformator ist je nach Netzspannung und Leistung des Stromaggregats bzw. des Frequenzumformers (Umrichters) zu dimensionieren und kann ggf. auch entfallen.

Vorzugsweise ist der Frequenzumformer über einen Schleifringanschluss mit der Rotorwicklung verbunden. Eine Schleifringanschluss kann vorteilhaft auf die spezifischen Eigenschaften eines sich im Betrieb drehenden Rotors angepasst werden.

Die Rotorwicklung ist vorzugsweise in Form einer Drehstromwicklung gebildet und der Rotor weist einen ferromagnetischen Hohlkörper, vorzugsweise in Form eines Blechpakets, auf. Vor dem Hintergrund, dass im Unterschied zu einem Rotor einer reinen Synchronmaschine durch den beim neuen Konzept vorgesehenen Wechselfluss Wirbelströme auftreten können, werden die Wirbelströme durch gegeneinander isolierte Bleche des Blechpakets klein gehalten.

Der Antrieb ist vorzugsweise in Form einer Turbine und/oder eines Schwungrades gebildet. Das Schwungrad kann beispielsweise auf einer Antriebswelle sitzen und vergrößert somit die Wellenmasse. Auf diese Weise kann Energie zwischengespeichert werden und beispielsweise bei einer Netzspitzenlast abgenommen werden. Gegebenenfalls kann der Antrieb ausschließlich durch das Schwungrad gebildet sein. Durch die Entkopplung der Antriebsdrehzahl von der Netzfrequenz kann nämlich bei kurzzeitigen Lastspitzen in kontrollierter Weise die im Wellenstrang gespeicherte kinetische Energie ausgenutzt werden. Dies ist besonders vorteilhaft bei Stromaggregaten im Rahmen einer dezentralen Energieversorgung, beispielsweise bei Stromaggregaten, die ein Inselnetz versorgen sollen. Denkbar ist auch der Einsatz eines solchen Aggregats speziell zur Netzstützung. Insbesondere für den Fall, dass das Stromaggregat als reiner Energiespeicher wirkt, könnte das Schwungrad den Antrieb ersetzen.

Im Rahmen einer besonders bevorzugten Weiterbildung des Stromaggregats liegt die Breite eines Luftspalts zwischen Rotor und Stator zwischen 1 cm und 8 cm. Während nämlich bei Asynchronmaschinen der Luftspalt in der Regel im Bereich weniger Millimeter liegt und bei Synchronmaschinen oberhalb von 10 cm liegen kann, berücksichtigt der im Rahmen der Weiterbildung eingestellte Luftspalt die spezielle Ausbildung des Generators des vorliegenden Konzepts bei variablem Frequenzbetrieb. Durch den vorliegend optimierten Luftspalt werden einerseits Rückwirkungen des Stators auf das Feld vermieden und andererseits eine Blindleistung möglichst gering gehalten.

Das Stromaggregat gemäß dem neuen Konzept ist prinzipiell für große Leistungen geeignet, für die Getriebelösungen zur Entkopplung von Antriebs- und Generatordrehzahl bislang nicht möglich oder ineffizient sind. Besonders vorteilhaft erweist sich das vorliegende Konzept auch im unteren Leistungsbereich, d. h. vorzugsweise bei einer Leistung unterhalb von unter 100 MW, insbesondere unterhalb von 10 MW, insbesondere unterhalb von 1 MW. Bei diesem Leistungsbereich erweist sich das Stromaggregat vor allem zur Erzeugung eines Prüffelds als vorteilhaft. So können vorzugsweise Rotorspannungen unterhalb 1 kV und eine Statorspannung oberhalb von 10 kV in diesem Leistungsbereich erzeugt werden. Vorteilhaft ist auch eine Anwendung, bei der Rotorspannungen unterhalb von 5 kV liegen und/ oder Statorspannungen oberhalb von 10 kV liegen.

Ein Ausführungsbeispiel der Erfindung wird nachfolgend anhand der Zeichnung beschrieben. Dies soll das Ausführungsbeispiel nicht maßgeblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Im Einzelnen zeigt die Zeichnung in:

FIG 1      ein Schema einer besonders bevorzugten Ausführungs- form des Stromaggregats gemäß dem neuen Konzept;

FIG 2      zwei den übersynchronen bzw. untersynchronen Be- trieb verdeutlichende Schemata, die das Zusammen- spiel von Drehfrequenz n des Antriebs, Rotordreh- feldfrequenz $f_2$, Statordrehfeldfrequenz $f_1$ und Pol- paaranzahl p zeigen.

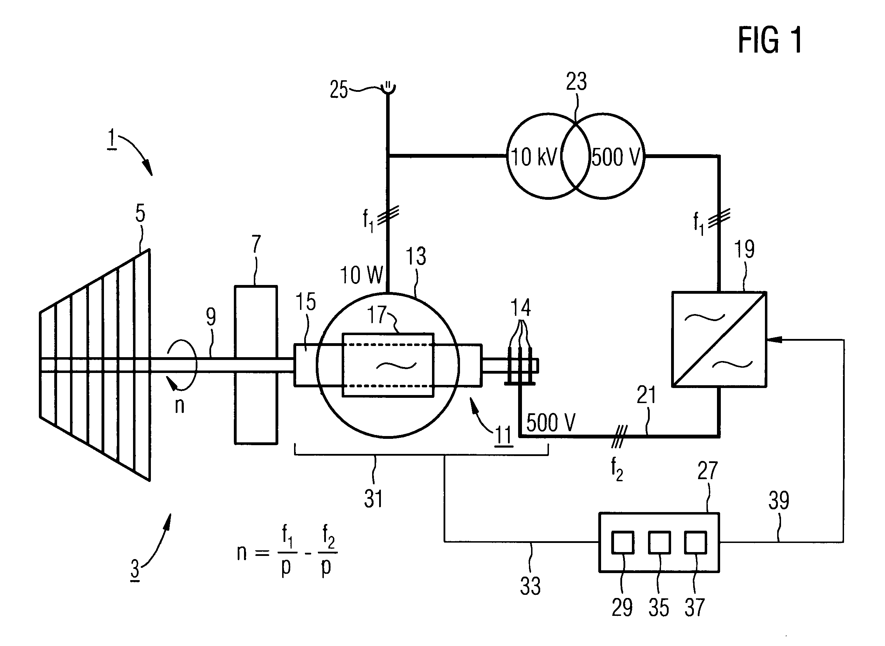

FIG 1 zeigt ein Stromaggregat 1 mit einem Antrieb 3, der vorliegend in Form einer Turbine 5 und einem zusätzlichen Schwungrad 7 gebildet ist. Der Antrieb 3 treibt über einen Wellenstrang 9 einen Generator 11 mit variabler Drehfrequenz n an. Die Drehfrequenz n ist dabei die Rotationsfrequenz des Wellenstrangs 9. Der Generator 11 ist durch einen Stator 13 und einen Rotor 15 gebildet, wobei der Rotor 15 direkt, d. h. ohne Getriebe, mit dem Wellenstrang 9 gekoppelt ist und sich ebenfalls mit variabler Drehfrequenz n dreht. Das heißt der Antrieb 3 ist gemäß der bevorzugten Ausführungsform zur Rotation des Rotors 15 mit variabler Drehfrequenz n ausgelegt.

Bei einem üblichen als Synchronmaschine ausgelegten Generator würde dies im Falle einer zweipoligen Maschine (Polpaar p = 1) dazu führen, dass die Drehfrequenz n gleich der Statordrehfeldfrequenz $f_1$ wäre, da bei üblichen Synchronmaschinen eine zum Rotor 15 stationäre Drehfelddurchflutung erzeugt wird, die sich in gleicher Weise wie der Rotor 15 mit dem Rotor, d. h. mit der Drehfrequenz n, dreht.

Im Unterschied zu derart üblichen Synchronmaschinen ist bei der hier dargestellten bevorzugten Ausführungsform eines Stromaggregats 1 der Rotor 15 mit einer symbolisch dargestellten Rotorwicklung 17 versehen, die in Form einer Drehstromwicklung gebildet ist und durch das Zeichen "3~" gekennzeichnet ist. Das heißt, die Rotorwicklung ist zur Erzeugung einer Drehfelddurchflutung des Generators 11 mit zum Rotor variabler Rotordrehfeldfrequenz $f_2$ ausgelegt. Ähnlich wie bei der Erzeugung von Drehstrom kann praktisch eine Art "Spulenanordnung" bei der Rotorwicklung 17 vorgenommen werden, die bei entsprechender Beaufschlagung mit Strom und/oder Spannung ein sich relativ zum Rotor 15 drehendes magnetisches Drehfeld (Erregerfeld) mit der Rotordrehfeldfrequenz $f_2$ erzeugt. Dies führt zu einer Drehfelddurchflutung des Generators 11, die relativ zum Stator 13 eine Statordrehfeldfrequenz $f_1$ aufweist. Die Statordrehfeldfrequenz stimmt zweckmäßigerweise mit der konstant oder variabel vorgegebenen Netzfrequenz überein. Bei konstanter Netzfrequenz lassen sich der Antrieb 3 und der Generator 11 unabhängig voneinander besonders zweckmäßig auslegen. Bei variabler Netzfrequenz kann die Statordrehfeldfrequenz nachgeführt werden.

Eine dementsprechend vorgenommene elektrische Beaufschlagung der Rotorwicklung 17 wird durch einen Frequenzumformer 19 vorgenommen, der zu diesem Zweck über eine elektrische Verbindung und einen Schleifringanschluss 14 mit der Rotorwicklung 17 elektrisch verbunden ist. Der Schleifringanschluss 14 sowie die elektrische Verbindung 21 ist, wie in FIG 1 durch drei Schrägstriche dargestellt, für drei Stränge der als Drehstromwicklung ausgeführten Rotorwicklung 17 für drei Phasen ausgelegt. Die elektrische Leistung kann vom Frequenzumformer bei einer Frequenz $f_2$ gemäß der Rotordrehfeldfrequenz mit variabler Rotordrehfeldfrequenz $f_2$ zur Verfügung gestellt werden. Die Leistung wird durch den Frequenzumformer 19 vom nicht näher dargestellten Netz bezogen. Dazu ist der Frequenzumformer 19 über einen Transformator 23 mit einem Netzanschluss 25 verbunden. Die Netzfrequenz entspricht vorliegend im Unterschied zur Rotordrehfeldfrequenz $f_2$ der Statordrehfeldfrequenz $f_1$, so dass der Frequenzumformer 19 eine Umrichtung von der Netzfrequenz $f_1$ auf die Rotordrehfeldfrequenz $f_2$ vornimmt. Die Umrichtung erfolgt bei der hier dargestellten Ausführungsform lediglich auf dem Spannungsniveau der Rotorwicklung, vorliegend nämlich bei 500 V. Dagegen erfolgt die Leistungsabgabe des Stators 13 auf einem Spannungsniveau von 10 kV, was der Netzspannung entspricht. Gemäß dem neuen Konzept ist bei der in FIG 1 dargestellten besonders bevorzugten Ausführungsform eines Stromaggregats 1 also lediglich eine Frequenzumformung auf dem Spannungsniveau des Rotors (500 V) vorzunehmen. Übliche Konzepte müssten dagegen die gesamte Generatorleistung frequenzumformen, die vorliegend auf einem Spannungsniveau von 10 kV liegt. Vorteilhaft kann bei der hier gezeigten besonders bevorzugten Ausführungsform eines Stromaggregats 1, also der Frequenzumformer 19, besonders kompakt und kostengünstig ausgeführt werden. Ein Transformator 23 nimmt die für diese Ausführungsform notwendige Spannungstransformation, von Netzspannung bei 10 kV auf Rotorspannung bei 500 V, vor und ist zu diesem Zweck zwischen den Netzanschluss 25 und den Frequenzumformer 19 geschaltet.

Der Frequenzumformer 19 weist zur Frequenzumrichtung vorzugsweise einen Eingangsstromrichter, einen Energiespeicherzwischenkreis und einen Ausgangsstromrichter auf. Der Energiespeicherzwischenkreis kann vorzugsweise in Form eines Kondensators oder einer Drosselspule gebildet sein. Der Frequenzumformer 19 weist darüber hinaus Mittel zur feldorientierten Beaufschlagung der Rotorwicklung 17 auf. Dazu weist der Frequenzumformer 19 entsprechende Halbleiterventile auf, die für eine phasenrichtige Beaufschlagung eines entsprechenden Strangs, der als Drehstromwicklung ausgeführten Rotorwicklung 17 sorgen.

Das vorliegende Stromaggregat sieht damit eine variable elektrische Beaufschlagung der Rotorwicklung 17 durch den Frequenzumformer 19 derart vor, dass bei variabler Drehfrequenz $n$ des Rotors 15 und variabler Rotordrehfeldfrequenz $f_2$ zum Rotor 15 eine vorgegebene und vorliegend weitgehend konstante Statordrehfeldfrequenz $f_1$ vorliegt. Gegebenenfalls kann die vorbestimmte oder vorgegebene Statordrehfeldfrequenz $f_1$, insbesondere im Fall kleinerer Netze, auch transient oder leicht transient sein. Die Statordrehfeldfrequenz $f_1$ stellt damit eine vergleichsweise konstante Regelrichtgröße dar. Dazu ist eine durch eine Regelung vorgegebene variable elektrische Beaufschlagung der Rotorwicklung 17 mit einer dafür ausgelegten Regelung 27 berechnet worden. Diese weist eine symbolisch dargestellte Aufnahme 29 für Messwerte des Generators 11 auf, die mittels einer Sensorik 31 am Generator 11 aufgenommen werden. Die Messwerte werden über eine Regelverbindung 33 wenigstens vom Stator und bei Bedarf auch vom Rotor 15 zur Regelung 27 übermittelt. Des Weiteren weist die Regelung 27 eine Recheneinheit 35 für eine Simulation des Generators 11 auf. Unter Simulation aller im Generator 11 auftretenden Magnetflüsse gemäß einem dafür ausgelegten Differentialgleichungsmodell wird in der Ausgabe 37 der Regelung 27 ein nicht näher dargestelltes Steuersignal bereitgestellt, das an den Frequenzumformer 19 über eine weitere Regelverbindung 39 übermittelt wird. Gemäß dem Steuersignal erfolgt eine oben erläuterte feldorientierte Beaufschlagung der Rotorwicklung 17 die derart ist, dass bei variabler Drehfrequenz $n$ des Rotors 15 und variabler Rotordrehfeldfrequenz $f_2$ eine vorgegebene Statordrehfeldfrequenz $f_1$ vorliegt.

Bei der in FIG 1 dargestellten besonders bevorzugten Ausführungsform eines Stromaggregats 1 ist beispielhaft verdeutlicht, dass dieses Stromaggregat 1 vorteilhaft zur Erzeugung hoher Spannungen im Bereich von 10 kV genutzt werden kann, wobei die Spannungen an der Rotorwicklung vergleichsweise klein (500 V) sind. Es kann also bei einer vergleichsweise geringen Leistung beispielsweise ein Prüffeld mit variierender Spannung erstellt werden.

Darüber hinaus eignet sich der Einsatz des Stromaggregats 1 auch als Lastspitzenaggregat oder als Einzelnetzversorgeraggregat. In diesem Fall ist insbesondere das Schwungrad 7 als Teil des Antriebs 3 als Energiezwischenspeicher vorteilhaft. In diesem Fall kann die Leistung des ansonsten auch für höhere Leistungen geeigneten Stromaggregats durchaus unterhalb von 10 MW liegen, um beispielsweise im Rahmen einer dezentralen Versorgung ein Inselnetz zu bespeisen.

Zur Auslegung des mit variabler Rotordrehfeldfrequenz $f_1$ erzeugten Drehfelddurchflutung vorgesehenen Generators 11 erweist sich ein Luftspalt zwischen Rotor und Stator als vorteilhaft, der weit oberhalb eines Luftspalts üblicher Asynchronmaschinen liegt, andererseits aber unterhalb von Luftspalten üblicher Synchronmaschinen liegt. Eine Breite eines solchen Luftspalts zwischen Rotor und Stator liegt vorteilhaft zwischen 1 cm und 8 cm. Bei der in FIG 1 dargestellten besonders bevorzugten Ausführungsform eines Stromaggregats 1 berücksichtigt ein Luftspalt zwischen 2 cm und 4 cm die Auslegung des Stromaggregats 1 für eine Rotorspannung von 500 V und eine Statorspannung von 10 kV bei einer entsprechenden Rotordrehfeldfrequenz $f_2$ und einer Statordrehfeldfrequenz $f_1$.

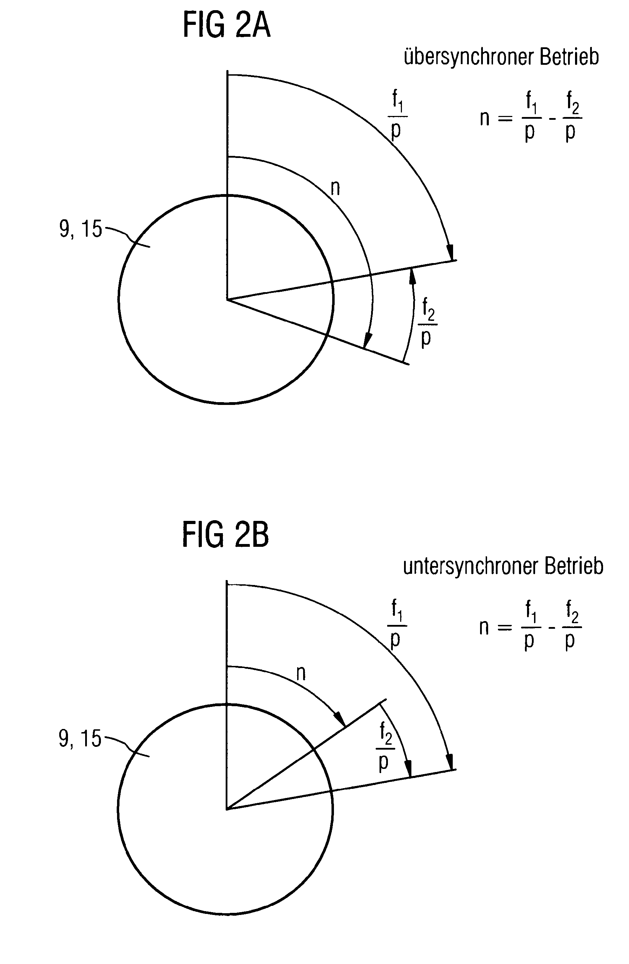

FIG 2 zeigt zur Erläuterung das Zusammenspiel der unterschiedlichen in Bezug auf FIG 1 genutzten Frequenzangaben relativ zum Wellenstrang 9 bzw. relativ zum Rotor 15. Im übersynchronen Betrieb (FIG 2A) wird vom Frequenzumformer 19 Leistung in die Rotorwicklung 17 gegeben. Das Rotordrehfeld, das zur Drehfelddurchflutung führt, dreht sich in zum Rotor 15 entgegengesetzter Richtung mit der Rotordrehfeldfrequenz $f_2$. Dies führt zu einer Statordrehfeldfrequenz $f_1$, die unterhalb der Drehfrequenz $n$ des Wellenstrangs 9 bzw. des Rotors 15 liegt.

Im untersynchronen Betrieb wird vom Frequenzumformer 19 Leistung aus der Rotorwicklung 17 genommen. Das zur Drehfelddurchflutung führende Rotordrehfeld dreht sich in gleicher Richtung wie der Rotor mit der Rotordrehfeldfrequenz $f_2$ gegenüber dem Rotor 15. Dies führt dazu, dass die Statordrehfeldfrequenz $f_1$ oberhalb der Drehfrequenz $n$ des Wellenstrang 9 bzw. des Rotors 15 liegt. Durch eine gemäß der Regelung 27 vorgenommene Steuerung des Frequenzumformers 19 ist es also möglich bei sich ändernder variabler Drehfrequenz $n$ (FIG 2A, FIG 2B) eine Rotordrehfeldfrequenz $f_2$ ebenso variabel und darauf abgestimmt (FIG 2A, FIG 2B) derart zur Verfügung zu stellen, dass die Statordrehfeldfrequenz $f_1$ einen vorbestimmten bzw. vorgegebenen Wert erhält und insbesondere vergleichsweise konstant ist. Je nach Polpaarzahl wird dadurch eine Statordrehfeldfrequenz $f_1$ als Vielfaches oder Teil der Netzfrequenz zu Verfügung gestellt.

Bei bisher üblichen Verfahren zur Stromerzeugung ist ein als Synchronmaschine arbeitender Generator 11 im Rahmen eines Stromaggregats 1 vorgesehen, der notwendigerweise bei einer an die Netzfrequenz gekoppelten konstanten Drehzahl dreht. Dadurch ist sowohl eine variable Auslegung der Turbine 5 als auch des Generators 11 eingeschränkt. Um eine Entkopplung von Antrieb 3 und Generator 11 bei konstanter Netzfrequenz zu erreichen, ist ein Stromaggregat 1 aufweisend einen Antrieb 3, einen Generator 11 mit einem Stator 13 und einem Rotor 15 und einem Frequenzumformer 19 vorgesehen, bei dem erfindungsgemäß der Antrieb 3 zur Rotation des Rotors 15 mit variabler Drehfrequenz n ausgelegt ist; der Rotor 15 eine Rotorwicklung 17 aufweist, die zur Erzeugung einer Drehfelddurchflutung des Generators 11 mit zum Rotor 15 variabler Rotordrehfeldfrequenz $f_2$ ausgelegt ist; der Frequenzumformer 19 mit der Rotorwicklung 17 elektrisch verbunden ist; eine Regelung 27 vorgesehen ist, aufweisend eine Aufnahme 29 für Messwerte vom Generator 11, eine Recheneinheit 35 für eine Generatorsimulation und eine Ausgabe 37 für ein Steuersignal an den Frequenzumformer 19; wobei aufgrund des Steuersignals eine elektrische Beaufschlagung der Rotorwicklung 17 durch den Frequenzumformer 19 derart bewirkbar ist, dass bei variabler Drehfrequenz n des Rotors 15 und bei variabler Rotordrehfeldfrequenz $f_2$ eine vorbestimmte Statordrehfeldfrequenz $f_1$ vorliegt. Des Weiteren wird ein Verfahren zur Erzeugung von Strom einer vorgegebenen Netzfrequenz angegeben.

**Patentansprüche**

1. Stromaggregat (1), aufweisend:

   - einen Antrieb (3);
   - einen Generator (11) mit einem Stator (13) und einem Rotor (15), und
   - einen Frequenzumformer (19),
   **dadurch gekennzeichnet, dass**
   - der Antrieb (3) zur Rotation des Rotors (15) mit variabler Drehfrequenz (n) ausgelegt ist;
   - der Rotor (15) eine Rotorwicklung (17) aufweist, die zur Erzeugung einer Drehfelddurchflutung des Generators (11) mit zum Rotor (15) variabler Rotordrehfeldfrequenz ($f_2$) ausgelegt ist;
   - der Frequenzumformer (19) mit der Rotorwicklung (17) elektrisch verbunden ist;
   - eine Regelung (27) vorgesehen ist, aufweisend eine Aufnahme (29) für Messwerte vom Generator (11), eine Recheneinheit (35) für eine Generatorsimulation und eine Ausgabe (37) für ein Steuersignal an den Frequenzumformer (19); wobei
   - aufgrund des Steuersignals eine elektrische Beaufschlagung der Rotorwicklung (17) durch den Frequenzumformer (19) gemäß der Formel

$$n = \frac{f_1 - f_2}{p} \quad \text{bewirkbar ist,}$$

dass bei variabler Drehfrequenz (n) des Rotors (15) und variabler Rotordrehfeldfrequenz ($f_2$) eine vorgegebene Statordrehfeldfrequenz ($f_1$) vorliegt,
wobei n die Drehfrequenz des Rotors ist, f1 die Statordrehfeldfrequenz ist, d. h. die den Stator durchsetzende Frequenz der Drehfelddurchflutung, f2 die Rotordrehfeldfrequenz ist, d. h. die sich relativ zur Rotordrehzahl ergebende Frequenz der durch die Rotorwicklung erzeugten Drehfelddurchflutung, p die Anzahl der Polpaare des Generators ist.

2. Stromaggregat (1) nach Anspruch 1,
   **dadurch gekennzeichnet, dass**
   die Regelung (27) wenigstens mit einer Regelverbindung (33) zum Generator (11) und einer Regelverbindung zum Frequenzumformer (39) verbunden ist, die zur Übermittlung von Messwerten vom Generator (11) zur Regelung (27) bzw. zur Übermittlung eines Steuersignals von der Regelung (27) zum Frequenzumformer (19) ausgelegt ist.

3. Stromaggregat (1) nach Anspruch 1 oder 2,
   **dadurch gekennzeichnet, dass**
   die Regelung (27) eine "feldorientierte" Regelung ist.

4. Stromaggregat (1) nach einem der Ansprüche 1 bis 3,
   **dadurch gekennzeichnet, dass**
   der Generator (11) elektrisch mit einem Netzanschluss (25) verbunden ist.

5. Stromaggregat (1) nach einem der Ansprüche 1 bis 4,
   **dadurch gekennzeichnet, dass**
   der Frequenzumformer (19) elektrisch mit einem Netzanschluss (25) verbunden ist.

6. Stromaggregat (1) nach einem der Ansprüche 1 bis 5,
   **dadurch gekennzeichnet, dass**
   der Frequenzumformer (19) über einen Transformator (23) mit dem Netzanschluss (25) verbunden ist.

7. Stromaggregat (1) nach einem der Ansprüche 1 bis 6,
   **dadurch gekennzeichnet, dass**
   der Frequenzumformer (19) über einen Schleifringanschluss (14) mit der Rotorwicklung (17) verbunden ist.

**8.** Stromaggregat (1) nach einem der Ansprüche 1 bis 7,
**dadurch gekennzeichnet, dass**
die Rotorwicklung (17) in Form einer Drehstromwicklung gebildet ist und der Rotor (15) einen ferromagnetischen Hohlkörper in Form eines Blechpakets aufweist.

**9.** Stromaggregat (1) nach einem der Ansprüche 1 bis 8,
**dadurch gekennzeichnet, dass**
der Antrieb (3) in Form einer Turbine (5) und/oder eines Schwungrades (7) gebildet ist.

**10.** Stromaggregat (1) nach einem der Ansprüche 1 bis 9,
**dadurch gekennzeichnet, dass**
die Breite eines Luftspalts zwischen Rotor (15) und Stator (13) zwischen 1 cm und 8 cm beträgt.

**11.** Stromaggregat (1) nach einem der Ansprüche 1 bis 10,
**gekennzeichnet durch**
eine Auslegung auf eine Leistung unterhalb von 100 MW, insbesondere unterhalb von 10 MW, insbesondere unterhalb von 1 MW.

**12.** Stromaggregat (1) nach Anspruch 11,
**gekennzeichnet durch**
eine Auslegung auf eine Rotorspannung unterhalb von 1 kV und eine Statorspannung oberhalb von 10 kV.

**13.** Stromaggregat (1) nach einem der Ansprüche 1 bis 12 in Form eines Lastspitzenaggregats.

**14.** Stromaggregat (1) nach einem der Ansprüche 1 bis 12 in Form eines Einzelnetzversorgers.

**15.** Verfahren zur Erzeugung von Strom einer vorgegebenen Netzfrequenz, insbesondere mit einem Stromaggregat (1) nach einem der vorhergehenden Ansprüche,
bei dem in einem Generator (11), aufweisend einen Rotor (15) und einen Stator (13),

- eine Rotorwicklung (17) mit einer variablen Drehfrequenz (n) rotiert wird;
- Messwerte des Generators (11) aufgenommen werden, der Generator (11) simuliert wird, und ein Steuersignal ausgegeben wird; und
- aufgrund des Steuersignals eine elektrische Beaufschlagung der Rotorwicklung (17) derart bewirkt wird, dass bei variabler Drehfrequenz (n) des Rotors (15) eine Drehfelddurchflutung des Generators (11) mit zum Rotor (15) variabler

Rotordrehfeldfrequenz ($f_2$) von der Rotorwicklung (17) gemäß der Formel

$$n = \frac{f_1 - f_2}{p}$$ erzeugt wird, dass sich eine vorbestimmte Statordrehfeldfrequenz ($f_1$) einstellt,
wobei n die Drehfrequenz des Rotors ist, f1 die Statordrehfeldfrequenz ist, d. h. die den Stator durchsetzende Frequenz der Drehfelddurchflutung, f2 die Rotordrehfeldfrequenz ist, d. h. die sich relativ zur Rotordrehzahl ergebende Frequenz der durch die Rotorwicklung erzeugten Drehfelddurchflutung, p die Anzahl der Polpaare des Generators ist.

**Claims**

**1.** Generating unit (1) having:

- a drive (3);
- a generator (11) with a stator (13) and a rotor (15), and
- a frequency converter (19),
**characterized in that**
- the drive (3) is embodied in such a way as to drive the rotor (15) at a variable rotational frequency (n);
- the rotor (15) has a rotor winding (17) that is embodied in such a way as to produce a rotary field magnetomotive force of the generator (11) with a rotor rotary field frequency ($f_2$) which is variable in relation to the rotor (15);
- the frequency converter (19) is electrically connected to the rotor winding (17);
- a regulating device (27) comprising a recording element (29) for measuring values of the generator (11), a calculating unit (35) for a generator simulation, and a transmitter (37) for transmitting a control signal to the frequency converter (19) is provided; wherein
- on the basis of the control signal, an electrical excitation of the rotor winding (17) can be triggered by the frequency converter (39) according to the formula $n = \dfrac{f_1 - f_2}{p}$ such that a predetermined stator rotary field frequency ($f_1$) is present in the event of a variable rotational frequency (n) of the rotor (15) and a variable rotor rotary field frequency ($f_2$),

where n is the rotational frequency of the rotor, $f_1$ is the stator rotary field frequency, i.e. the frequency of the rotary field magnetomotive force permeating the stator, $f_2$ is the rotor rotary field frequency, i.e. the resulting frequency relative to the rotor speed of the rotary field magnetomotive force produced by the rotor winding, and p is the number of pairs of poles of the generator.

2. Generating unit (1) according to Claim 1, **characterized in that** the regulating device (27) is at least connected to the generator (11) by one regulating device connection (33) and to the frequency converter (39) by one regulating device connection, which is designed to transmit the measuring values from the generator (11) to the regulating device (27) and to transmit a control signal from the regulating device (27) to the frequency converter (19).

3. Generating unit (1) according to Claim 1 or 2, **characterized in that** the regulating device (27) is a "field oriented" regulating device.

4. Generating unit (1) according to one of Claims 1 to 3, **characterized in that** the generator (11) is electrically connected to a network connection (25).

5. Generating unit (1) according to one of Claims 1 to 4, **characterized in that** the frequency converter (19) is electrically connected to a network connection (25).

6. Generating unit (1) according to one of Claims 1 to 5, **characterized in that** the frequency converter (19) is electrically connected to the network connection (25) by means of a transformer (23).

7. Generating unit (1) according to one of Claims 1 to 6, **characterized in that** the frequency converter (19) is connected to the rotor winding (17) by means of a slip-ring connector (14).

8. Generating unit (1) according to one of Claims 1 to 7, **characterized in that** the rotor winding (17) is designed in the form of a three-phase winding, and the rotor (15) has a ferromagnetic hollow body in the form of a laminated core.

9. Generating unit (1) according to one of Claims 1 to 8, **characterized in that** the drive (3) is designed in the form of a turbine (5) and/or a flywheel (7).

10. Generating unit (1) according to one of Claims 1 to 9, **characterized in that** the width of an air gap between rotor (15) and stator (13) is between 1 cm and 8 cm.

11. Generating unit (1) according to one of Claims 1 to 10, **characterized by** being designed for a power below 100 MW, in particular below 10 MW, in particular below 1 MW.

12. Generating unit (1) according to Claim 11, **Characterized by** being designed for a rotor voltage below 1 kV and a stator voltage above 10 kV.

13. Generating unit (1) according to one of Claims 1 to 12 in the form of a peak-load device.

14. Generating unit (1) according to one of Claims 1 to 12 in the form of an individual network supply unit.

15. Method for producing current with a predetermined network frequency, in particular using a generating unit (1) according to one of the preceding claims, in which, in a generator (11) having a rotor (15) and a stator (13),

- a rotor winding (17) is driven at a variable rotational frequency (n);
- measuring values of the generator (11) are recorded, the generator (11) is simulated, and a control signal is transmitted; and
- on the basis of the control signal, an electrical excitation of the rotor winding (17) is triggered in such a way that, in the event of a variable rotational frequency (n) of the rotor (15), a rotary field magnetomotive force of the generator (11) is produced according to the formula

$$n = \frac{f_1 - f_2}{p}$$ by the rotor winding (17) at a rotor

rotary field frequency ($f_2$), which is variable in relation to the rotor (15), that a predetermined stator rotary field frequency ($f_1$) is established, where n is the rotational frequency of the rotor, $f_1$ is the stator rotary field frequency, i.e. the frequency of the rotary field magnetomotive force permeating the stator, $f_2$ is the rotor rotary field frequency, i.e. the resulting frequency relative to the rotor speed of the rotary field magnetomotive force produced by the rotor winding, and p is the number of pairs of poles of the generator.

**Revendications**

1. Groupe ( 1 ) électrogène, comportant :

- un entraînement ( 3 ) ;
- une génératrice ( 11 ) ayant un stator ( 13 ) et un rotor ( 15 ), et
- un convertisseur ( 19 ) de fréquence ;
**caractérisé en ce que**
- l'entraînement ( 3 ) est conçu pour la rotation du rotor ( 5 ) à une fréquence ( n ) de rotation variable ;

- le rotor ( 15 ) a un enroulement ( 17 ) rotorique, qui est conçu pour la production d'un flux à courant tournant du générateur ( 11 ) à une fréquence ( $f_2$ ) de champ tournant du rotor, variable par rapport au rotor ;

- le convertisseur ( 19 ) de fréquence est relié électriquement à l'enroulement ( 17 ) rotorique ;

- il est prévu une régulation ( 27 ), comportant un enregistrement ( 29 ) de valeurs de mesure provenant du générateur ( 11 ), une unité ( 35 ) informatique pour une simulation du générateur et une sortie ( 37 ) pour un signal de commande allant au convertisseur ( 19 ) de fréquence ; dans lequel

- sur la base du signal de commande, une alimentation de l'enroulement ( 17 ) rotorique peut être provoquée par le convertisseur ( 19 ) de fréquence, suivant la formule

$$n = \frac{f1 - f2}{P},$$ **en ce que**, à la fréquence ( n ) de rotation variable du rotor ( 15 ) et à la fréquence ( $f_2$ ) de champ tournant du rotor variable, il y a une fréquence ( $f_1$ ) de champ de rotation du stator prescrite, ( n ) étant la fréquence de rotation du rotor, ( $f_1$ ) étant la fréquence du champ tournant du stator, c'est-à-dire la fréquence du flux du champ tournant passant dans le stator, ( $f_2$ ) étant la fréquence du champ tournant du rotor, c'est-à-dire la fréquence obtenue par rapport à la fréquence de rotation du rotor du flux de champ tournant produit par l'enroulement rotorique, p étant le nombre de paires de pôle du générateur.

2.  Groupe ( 1 ) électrogène suivant la revendication 1, **caractérisé en ce que** la régulation ( 27 ) est reliée au moins par une liaison ( 33 ) de régulation au générateur ( 11 ) et par une liaison de régulation au convertisseur ( 39 ) de fréquence, qui est conçue pour la transmission de valeurs de mesure du générateur ( 11 ) à la régulation ( 27 ) et pour la transmission d'un signal de commande de la régulation ( 27 ) au convertisseur ( 19 ) de fréquence.

3.  Groupe ( 1 ) électrogène suivant la revendication 1 ou 2, **caractérisé en ce que** la régulation ( 27 ) est une régulation « par le champ ».

4.  Groupe ( 1 ) électrogène suivant l'une des revendications 1 à 3, **caractérisé en ce que** le générateur ( 11 ) est relié électriquement à une borne ( 25 ) du réseau.

5.  Groupe ( 1 ) électrogène suivant l'une des revendications 1 à 4, **caractérisé en ce que** le convertisseur ( 19 ) est relié électriquement à une borne ( 25 ) du réseau.

6.  Groupe ( 1 ) électrogène suivant l'une des revendications 1 à 5, **caractérisé en ce que** le convertisseur ( 19 ) de fréquence est relié à la borne ( 25 ) du réseau par un transformateur ( 23 ).

7.  Groupe ( 1 ) électrogène suivant l'une des revendications 1 à 6, **caractérisé en ce que** le convertisseur ( 19 ) de fréquence est relié à l'enroulement ( 17 ) rotorique par une borne ( 14 ) à bague collectrice.

8.  Groupe ( 1 ) électrogène suivant l'une des revendications 1 à 7, **caractérisé en ce que** l'enroulement ( 17 ) rotorique est sous la forme d'un enroulement à courant triphasé et le rotor ( 15 ) comporte un corps creux ferromagnétique, sous la forme d'un paquet de tôles.

9.  Groupe ( 1 ) électrogène suivant l'une des revendications 1 à 8, **caractérisé en ce que** l'entraînement ( 3 ) est sous la forme d'une turbine ( 5 ) et/ou d'un volant ( 7 ).

10. Groupe ( 1 ) électrogène suivant l'une des revendications 1 à 9, **caractérisé en ce que** la largeur d'un entrefer entre le rotor ( 15 ) et le stator ( 13 ) est comprise entre 1 cm et 8 cm.

11. Groupe ( 1 ) électrogène suivant l'une des revendications 1 à 10, **caractérisé par** une conception pour une puissance inférieure à 100 MW, notamment en-dessous de 10 MW, notamment en-dessous de 1 MW.

12. Groupe ( 1 ) électrogène suivant la revendication 11, **caractérisé par** une conception pour une tension du rotor inférieure à 1 kV et une tension du stator supérieure à 10 kV.

13. Groupe ( 1 ) électrogène suivant l'une des revendications 1 à 12, sous la forme d'un groupe à pointes de charge.

14. Groupe ( 1 ) électrogène suivant l'une des revendications 1 à 12, sous la forme d'une alimentation individuelle de réseau.

15. Procédé pour produire du courant à une fréquence réseau définie, notamment comportant un groupe ( 1 ) électrogène suivant l'une des revendications précédentes, dans lequel dans une génératrice ( 11 ) ayant un stator ( 13 ) et un rotor ( 15 ),

> - un enroulement (17) rotorique est mis en rotation à une fréquence de rotation variable ;
> - on enregistre des valeurs de mesure de la génératrice, on simule la génératrice et on émet un signal de commande ; et
> - sur la base du signal de commande, on provoque une alimentation électrique de l'enroulement (17) rotorique, de manière à produire, suivant la formule n= (f1-f2)/p, par l'enroulement (17) rotorique, pour une fréquence (n) de rotation variable du rotor (15), un flux de champs tournant de la génératrice (11) ayant une fréquence (f2) de champs tournant de rotor variable par rapport au rotor (15), de sorte qu'il s'établisse une fréquence (f1) de champs tournant du rotor déterminée à l'avance,

( n ) étant la fréquence de rotation du rotor, ( $f_1$ ) étant la fréquence du champ tournant du stator, c'est-à-dire la fréquence du flux du champ tournant passant dans le stator, ( $f_2$ ) étant la fréquence du champ tournant du rotor, c'est-à-dire la fréquence obtenue par rapport à la fréquence de rotation du rotor du flux de champ tournant produit par l'enroulement rotorique, p étant le nombre de paires de pôle du générateur.

EP 1 834 404 B1

FIG 1

$$n = \frac{f_1}{p} - \frac{f_2}{p}$$

# FIG 2A

übersynchroner Betrieb

$$n = \frac{f_1}{p} - \frac{f_2}{p}$$

$\frac{f_1}{p}$

$n$

$\frac{f_2}{p}$

9, 15

# FIG 2B

untersynchroner Betrieb

$$n = \frac{f_1}{p} - \frac{f_2}{p}$$

$\frac{f_1}{p}$

$n$

$\frac{f_2}{p}$

9, 15

**EP 1 834 404 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004030199 A